# FASCICULE DE BREVET EUROPEEN

(11) **EP 3 987 165 B1**
(45) Date de publication et mention de la délivrance du brevet: **04.12.2024**
(21) Numéro de dépôt: 20743208.9
(22) Date de dépôt: 11.06.2020
(51) Int. Cl.: F02C 5/12

(54) **SYSTÈME DE COMBUSTION A VOLUME CONSTANT AVEC INJECTION SYNCHRONISÉE**
VERBRENNUNGSSYSTEM MIT KONSTANTEM VOLUMEN UND SYNCHRONISIERTER EINSPRITZUNG
CONSTANT-VOLUME COMBUSTION SYSTEM WITH SYNCHRONIZED INJECTION

(30) Priorité: 21.06.2019 FR 1906729
(43) Date de publication de la demande: 27.04.2022
(73) Titulaire: SAFRAN, 75015 Paris (FR); Safran Helicopter Engines, 64510 Bordes (FR)
(72) Inventeur: BOUYSSOU, Quentin, 77550 MOISSY-CRAMAYEL (FR); TALIERCIO, Guillaume, Alain, 77550 MOISSY-CRAMAYEL (FR); VIGUIER, Christophe, Nicols, Henri, 77550 MOISSY-CRAMAYEL (FR); MEJIA, Daniel, 77550 MOISSY-CRAMAYEL (FR)
(74) Mandataire: Cabinet Beau de Loménie
(86) Numéro de dépôt international: PCT/FR2020/050994
(87) Numéro de publication internationale: WO 2020/254743

(56) Documents cités:
- WO-A1-2018/234698
- US-A- 1 616 646
- US-A- 3 650 105
- US-A- 4 288 981

## Description

### Domaine Technique

La présente invention concerne le domaine des chambres de combustion de turbomachines d'aéronef, du type à combustion à volume constant. L'invention s'applique à tout type de turbomachines, en particulier aux turboréacteurs, turbopropulseurs, et turbomachines à soufflantes non carénées, aussi connues sous le vocable anglo-saxon de « Open Rotor ».

### Technique antérieure

Une turbomachine d'aéronef conventionnelle comporte de manière connue une ou plusieurs chambres de combustion. Une telle chambre de combustion est alimentée en air sous pression par un module de compresseur et il comporte un ou plusieurs injecteurs de carburant qui sont aptes à injecter du carburant dans le flux d'air admis pour le brûler et provoquer ainsi l'émission de gaz chauds qui sont utilisés pour entraîner une turbine, qui entraîne à son tour le module de compresseur et qui peut également entraîner une soufflante de la turbomachine.

Dans une telle chambre, le débit de carburant est continu et la combustion fonctionne selon un cycle dit de Brayton, c'est-à-dire selon un cycle de combustion à pression constante. Néanmoins, pour obtenir des gains de consommation spécifiques, il a été envisagé de remplacer la chambre de combustion fonctionnant selon un cycle de Brayton par une pluralité de chambres de combustion fonctionnant selon un cycle de Humphrey, c'est-à-dire selon un cycle de combustion à volume constant ou « CVC ». Le document WO 2016/120551 divulgue un module de combustion à volume constant comportant des chambres de combustion agencées autour d'un axe, chaque chambre comprenant un orifice d'entrée ou port d'admission de gaz comprimé et un orifice de sortie ou port d'échappement de gaz brûlés, et une vanne rotative d'admission/d'échappement. Chaque orifice d'entrée/sortie est configuré pour être ouvert ou fermé par la vanne rotative d'admission/d'échappement.

Dans ce type de module de combustion, la gestion des temps de transvasement et d'injection conditionne la qualité du processus de combustion. Le rendement de combustion a un impact direct sur le rendement du système global. Or, le pilotage de l'injection de carburant dans des systèmes de combustion à volume constant s'avère délicat et complexe à mettre en oeuvre. Il existe, par conséquent, un besoin pour optimiser la gestion des temps d'injection de carburant et la synchronisation avec les autres éléments (orifices d'entrée/sortie) dans ce type de système et simplifier sa mise en oeuvre. Le document WO 2018/234698 divulgue un système de combustion à volume constant. Le document US 4 288 981 divulgue un moteur de type turbine avec des injecteurs de carburants conventionnels fonctionnant de manière synchronisée avec l'alimentation en air.

### Exposé de l'invention

A cet effet, la présente invention propose un système de combustion à volume constant pour turbomachine d'après la revendication 1.

L'utilisation d'une même pièce mécanique, à savoir l'élément d'obturation, pour assurer à la fois la fonction de séquencement des ouvertures et fermetures en air et d'alimentation en carburant permet d'assurer une synchronisation efficace entre les temps critiques dans le système de combustion. On optimise la gestion des temps d'injection vis-à-vis des temps ou phases de combustion et d'échappement améliorant ainsi le rendement du système de combustion.

Selon une caractéristique particulière du système de l'invention, le culbuteur coopérant avec une ou plusieurs cames d'injection présentes sur l'élément d'obturation pour commander l'ouverture de la vanne d'injection. L' injection est réalisée directement dans la chambre de combustion. Par sa conception, la came d'injection permet à la fois une mise en pression du carburant injecté et une maîtrise de la quantité injectée.

Selon une autre caractéristique particulière du système selon l'invention, celui-ci comprend en outre un dispositif d'injection aérodynamique configuré pour alimenter en carburant chaque chambre de combustion de manière synchronisée via un ou plusieurs orifices d'injection présents sur l'élément d'obturation. Cela permet de réaliser une fonction de carburation des chambres de combustion avec des faibles tailles de gouttes de carburant sans avoir à mettre en oeuvre des niveaux élevés de pression de carburant. Il est ainsi possible d'obtenir des gains en consommation par rapport à une injection uniquement à forte pression.

L'invention a également pour objet une turbomachine comprenant un compresseur axial ou centrifuge et une turbine axiale ou centripète, la turbomachine comprenant en outre un système de combustion selon l'invention, le système de combustion étant présent entre le compresseur et la turbine.

L'invention a encore pour objet un aéronef comprenant au moins un turbopropulseur, le turbopropulseur comprenant une turbomachine selon l'invention.

### Brève description des dessins

[Fig. 1] La figure 1 est une vue schématique en coupe longitudinale d'une turbomachine comprenant un système de combustion conformément à un mode de réalisation de l'invention,
[Fig. 2A] La figure 2A est une vue schématique en perspective éclatée du système de combustion de la figure 1,
[Fig. 2B] La figure 2B est une vue de détail de la figure 2A montrant des chambre de combustion,
[Fig. 3] La figure 3 est une vue schématique en perspective de l'élément d'obturation du système de combustion de la figure 1,
[Fig. 4] La figure 4 est une vue partielle en coupe radiale du système de combustion de la figure 1 montrant une injection aérodynamique dans une chambre de combustion,
[Fig. 5] La figure 5 est une autre vue partielle en coupe radiale du système de combustion de la figure 1 montrant une injection directe dans une chambre de combustion.

### Description des modes de réalisation

L'invention s'applique d'une manière générale à une turbomachine comprenant un compresseur axial ou centrifuge et d'une turbine axiale ou centripète.

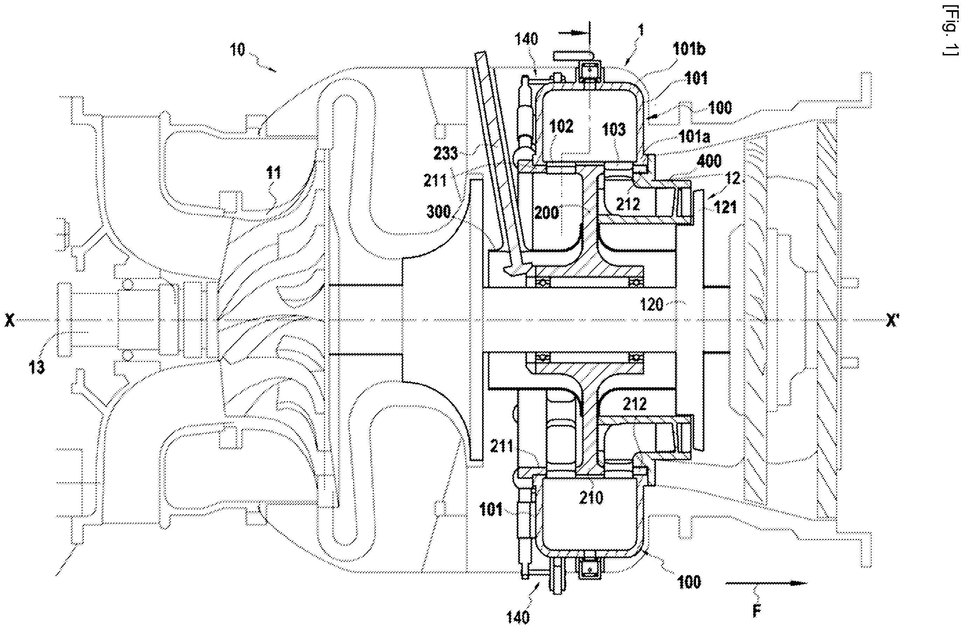

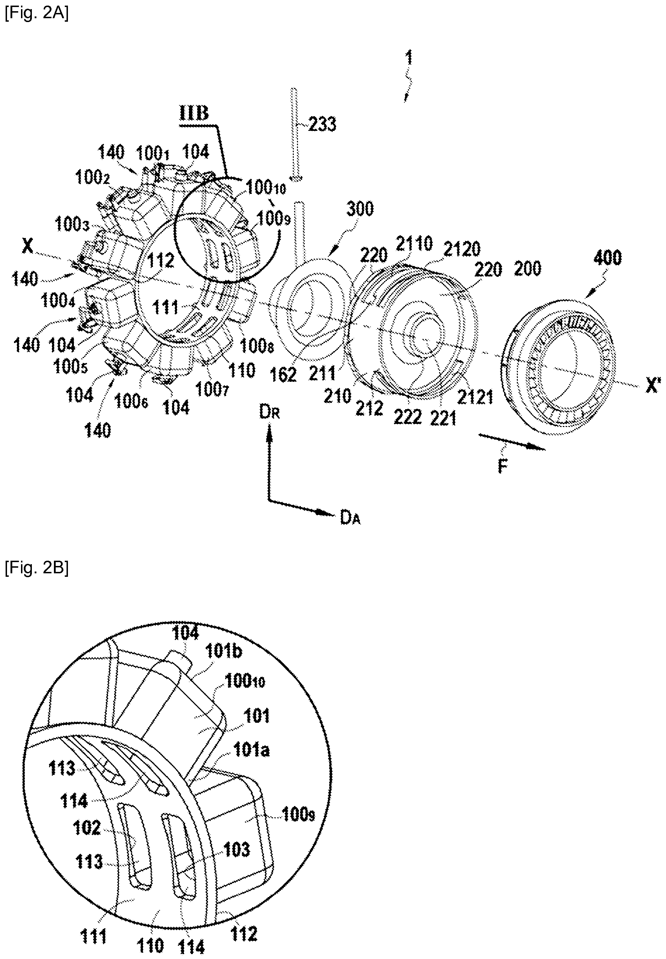

Les figures 1, 2A et 2B illustrent un système de combustion 1 conformément à un mode de réalisation de l'invention. Dans l'exemple décrit ici et tel que représenté sur la figure 1, le système de combustion 1 est intégré dans une turbomachine ou turbomoteur 10 pour turbopropulseur, le système de combustion étant placé dans le turbomoteur en aval d'un compresseur axialo-centrifuge 11 et en amont d'une turbine axiale 12, le compresseur 11 et la turbine 12 étant reliés entre eux par un système d'arbres 13. La turbine 12 comprend une roue mobile 120 reliée en son centre au système d'arbres 13 et comportant à son extrémité radiale externe une pluralité d'aubes 121.

Le système de combustion 1 comprend une pluralité de chambres de combustion, dans le mode de réalisation décrit ici 10 chambres de combustion 100, dénombrées 100, à 100₁₀ sur la figure, réparties de manière annulaire autour d'un axe XX' définissant une direction axiale D_{A}. Chaque chambre de combustion 100 est délimitée par une enceinte 101, ici de forme sensiblement parallélépipédique, un fond arrière fermé 101b solidaire de l'enceinte 101 et un anneau cylindrique 110 sur la face externe 112 duquel l'enceinte 101 est fixée par exemple par soudage, brasage, liaison mécanique (vis-écrou) ou collage lorsque les enceintes 101 et l'anneau cylindrique 110 sont réalisés en matériau métallique. L'anneau cylindrique 110 et les enceintes 101 peuvent être également réalisés en matériau composite à matrice céramique (CMC), c'est-à-dire un matériau formé d'un renfort en fibres de carbone ou céramique densifié par une matrice au moins partiellement céramique.

L'anneau cylindrique 110 forme le fond avant 101a de chaque chambre de combustion qui est situé au plus près de l'axe XX' dans une direction opposé au fond arrière 101b suivant une direction radiale D_{R}. L'anneau cylindrique 110 comporte une première série de lumières 113 formant chacune un orifice d'entrée ou port d'admission 102 d'une chambre de combustion 100 et une deuxième série de lumières 114 formant chacune un orifice de sortie ou port d'échappement 103 d'une chambre de combustion 100 (figure 2B). Le fond avant 101a de chaque chambre de combustion 100 comporte ainsi un orifice d'entrée 102 et un orifice de sortie 103. La face interne 111 de l'anneau cylindrique 110, qui comporte les orifices d'entrée et de sortie de chaque chambre de combustion, est destinée à être placée en regard d'une virole d'un élément d'obturation sélective décrit ci-après en détails. Les enceintes 101 des chambres de combustion s'étendent depuis la face externe 112 de l'anneau 110 dans la direction radiale D_{R}.

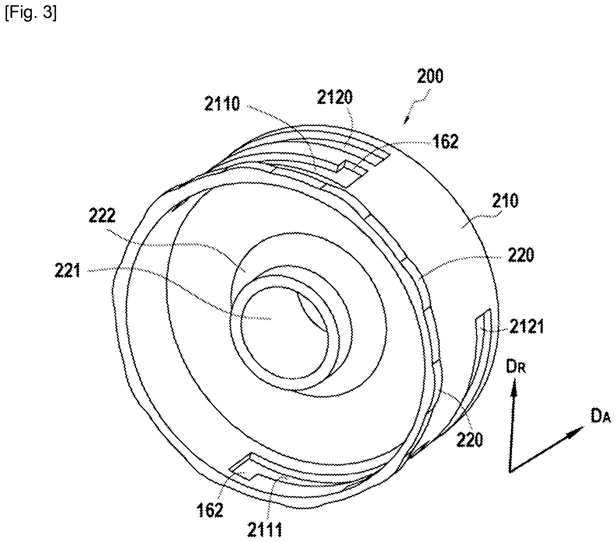

Le système de combustion 1 comprend également un élément d'obturation sélective 200 mobile en rotation autour de l'axe XX' par rapport aux chambres de combustion 100. L'élément d'obturation sélective 200 comprend une virole 210 en regard des orifices d'entrée et de sortie 102 et 103 des chambres de combustion 100. La virole 210 est divisée en une première portion annulaire 211 et une deuxième portion annulaire 212 s'étendant chacune sur toute la circonférence de la virole 210 (figures 2A et 3). La première portion annulaire 211 comporte au moins une lumière d'admission destinée à coopérer avec l'orifice d'entrée 102 de chaque chambre de combustion 100 lors de la rotation de l'élément d'obturation sélective 200. Dans l'exemple décrit ici, la première portion annulaire 211 comporte deux lumières d'admission 2110 et 2111 décalées angulairement de 180° le long de la première portion. La deuxième portion annulaire 212 comporte au moins une lumière d'échappement destinée à coopérer avec le port d'échappement 103 de chaque chambre de combustion 100 lors de la rotation de l'élément d'obturation sélective 200. Dans l'exemple décrit ici, la deuxième portion annulaire 212 comporte deux lumières d'échappement 2120 et 2121 décalées angulairement de 180° le long de la deuxième portion. Le début de chaque lumière d'admission 2110, 2111 est sensiblement aligné angulairement respectivement avec le début de chaque lumière d'échappement 2120 et 2121, les lumières d'échappement s'étendant sur une longueur circonférentielle plus grande que les lumières d'admission. L'élément d'obturation sélective peut être réalisé en matériau métallique ou en matériau composite CMC.

Le système de combustion 1 comprend en outre un guide d'admission fixe 300 présent à l'intérieur de la virole 210 de l'élément d'obturation 200 du côté de la première portion 211 de l'élément d'obturation et un collecteur d'échappement fixe 400 qui s'étend de manière annulaire à l'intérieur de la virole 210 de l'élément d'obturation sélective du côté et le long de la deuxième portion 212 de ladite virole (figure 1).

L'élément d'obturation sélective 200 est le seul élément mobile en rotation dans le système de combustion 1. Dans l'exemple décrit ici, il est entraîné en rotation au moyen d'un arbre d'entraînement 233 (figure 1). Lors de sa rotation, l'élément d'obturation 200 va ouvrir et fermer sélectivement les orifices d'entrée et de sortie 102 et 103 de chaque chambre de combustion afin de mettre en oeuvre une combustion à volume constant selon le cycle de Humphrey, c'est-à-dire comportant un temps de combustion, un temps d'échappement, et un temps d'admission d'air frais et de balayage des gaz brûlés.

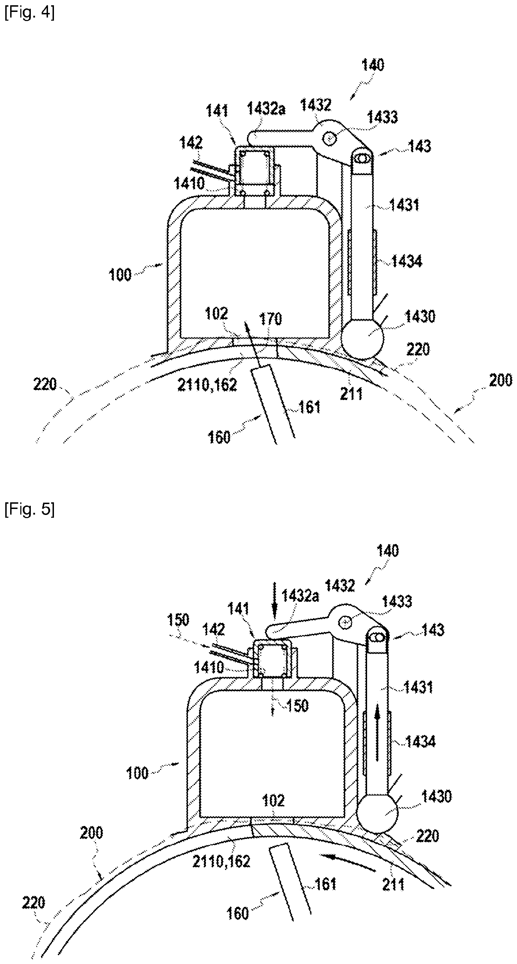

Conformément à l'invention, chaque chambre de combustion 100 comprend un dispositif d'injection de carburant 140 dont l'ouverture et la fermeture sont synchronisées par l'élément d'obturation 200. Dans l'exemple décrit ici, chaque dispositif d'injection de carburant 140 comprend une vanne d'injection 141 présente entre un circuit d'alimentation en carburant 142 et une chambre de combustion 100 (figures 4 et 5). Chaque dispositif d'injection de carburant 140 comprend également un culbuteur 143 configuré pour commander l'ouverture de la vanne d'injection 141. Plus précisément, le culbuteur 143 comprend un poussoir 1430 destiné à coopérer avec des cames d'injection comme expliqué ci-après, une tige de culbuteur 1431 prolongeant le poussoir 143 et un doigt 1432 monté pivotant autour d'un axe 1433 et relié à une de ses extrémités à la tige de culbuteur 1431. L'extrémité libre 1432a du doigt 1432 est en contact avec la vanne d'injection 141.

L'élément d'obturation 200 comporte une pluralité de cames d'injections 220 présentes ici sur l'extrémité de la première portion annulaire 211. Les cames d'injection 220 sont réparties sur la surface externe de la virole 210 de l'élément d'obturation 200 à des emplacements déterminés afin de commander l'injection de carburant dans chaque chambre de combustion 100 à des instants synchronisés avec le cycle de Humphrey mis en oeuvre avec l'élément d'obturation 200. En d'autres termes, les cames d'injection 220 sont placées à des positions angulaires sur la virole 210 de l'élément d'obturation de manière à déclencher l'injection de carburant dans une chambre de combustion juste avant l'initiation d'une phase de combustion dans celle-ci.

La réalisation présentée ici des systèmes d'obturation (orifices d'entrée/sortie) par des lumières radiales positionnées sur un anneau cylindrique peut aussi être obtenu par des disques percés de lumières axiales. Les deux disques (entrée et sortie) sont alors liés mécaniquement, l'un des deux comprenant le système de pilotage (came) du culbuteur d'injection de carburant.

Le fonctionnement d'un dispositif d'injection de carburant 140 est illustré sur les figures 4 et 5. La figure 4 montre le dispositif 140 en position de repos, c'est-à-dire lorsque le poussoir 1430 du culbuteur 143 n'est pas en contact avec une came d'injection 220. Dans cette position, l'extrémité libre 1432a du doigt 1432 n'exerce pas de pression sur la vanne d'injection 141 qui est maintenue dans sa position de fermeture par un ressort de rappel 1410. La tige de culbuteur 1431 est logée dans un fourreau de guidage 1434 munie également d'un ressort de rappel (non représenté sur les figures 4 et 5) afin de maintenir le culbuteur dans la position de repos.

Sur la figure 5, l'élément d'obturation s'est déplacé dans une position angulaire dans laquelle une came d'injection 220 entre en contact avec le poussoir 1430 du culbuteur. Dans cette position, la came d'injection 220 pousse sur la tige de culbuteur 1431qui, en se déplaçant suivant la direction D1, provoque le basculement du doigt 1432 et l'application d'un effort de pression de son extrémité libre 1432a sur la vanne d'injection 141. La vanne d'injection 141 est alors ouverte et du carburant 150 issu du circuit d'alimentation en carburant 142 peut alors être injecté dans la chambre de combustion 100.

La combustion peut être initiée de façon connue soit par un allumeur à étincelle (bougie), soit par un allumeur thermique à gaz (non représentés sur les figures 4 et 5). Si les conditions le permettent, la combustion peut également être initiée par recirculation des gaz d'échappement, ou RGE, comme dans un moteur diesel.

Le système de l'invention est ici remarquable en ce qu'on utilise la même pièce, à savoir l'élément d'obturation rotatif, pour commander à la fois les ouvertures et fermetures en air des chambres de combustion et l'injection de carburant dans celle-ci. On assure ainsi une gestion optimisée des temps ou phases nécessaires à la mise en oeuvre du cycle d'Humphrey. En outre, l'élément d'obturation permet une mise en pression du carburant dans la chambre de combustion sans avoir à utiliser une pompe haute pression externe.

Selon une caractéristique additionnelle de l'invention, le système de combustion à volume constant de l'invention comprend en outre un dispositif d'injection aérodynamique configuré pour alimenter en carburant chaque chambre de combustion de manière synchronisée via un ou plusieurs orifices d'injection présents sur l'élément d'obturation. Plus précisément, comme illustré sur les figures 4 et 5, un dispositif d'injection aérodynamique 160 comprend un circuit d'injection aérodynamique de pré-carburation 161 destiné à coopérer avec un ou plusieurs orifices d'injection 162 présents sur l'élément d'obturation. Dans l'exemple décrit ici, l'élément d'obturation 200 comporte deux orifices d'injection 162 présents sur la première portion annulaire 211 de la virole 210 à des positions angulaires permettant d'injecter de carburant dans une chambre de combustion juste avant l'initiation d'une phase de combustion dans celle-ci (figure 3). Comme illustrés notamment sur la figure 3, les orifices d'injection 162 correspondent à des ouvertures qui coopèrent avec les lumières d'admission 2110 et 2111 et qui sont ici décalées de celles-ci suivant la direction axiale D_{A}. On définit ainsi une zone d'injection basse pression aérodynamique qui combine l'injection de carburant avec l'admission d'air. De cette manière, on injecte à la fois du carburant et de l'air dans la chambre de combustion. La vitesse de l'air injecté à basse pression permet d'atomiser le carburant injecté.

La figure 4 illustre une position angulaire de l'élément d'obturation dans laquelle la sortie du circuit d'injection aérodynamique de pré-carburation 161 est alignée avec un orifice d'injection 162 commun avec la lumière d'admission 2110 qui est lui-même aligné avec l'orifice d'entrée 102 de la chambre de combustion.

Dans cette position, le circuit 161 est commandé pour délivrer un jet aérodynamique de carburant 170 dans la chambre de combustion 100 via l'orifice d'injection 162. L'injection aérodynamique consiste à injecter un mélange air/carburant dans la chambre de combustion. La vitesse de l'air admis dans la chambre de combustion permet d'atomiser le carburant injecté.

Sur la figure 5, l'élément d'obturation s'est déplacé dans une position angulaire dans laquelle la sortie du circuit d'injection aérodynamique de pré-carburation 161 n'est plus alignée avec un orifice d'injection 162. Cette position correspond à l'instant où du carburant 150 est injecté dans la chambre de combustion 100 par le dispositif d'injection de carburant 140 comme décrit précédemment.

Dans l'exemple décrit ci-avant, le dispositif d'injection utilise un culbuteur et une vanne d'injection pour l'injection directe de carburant. Toutefois d'autres dispositifs d'injection tels qu'un injecteur électrique à électrovanne par exemple peuvent être utilisés. Dans ce cas, l'élément d'obturation comprend des moyens pour commander l'activation de l'électrovanne en fonction de sa position angulaire. D'une manière générale, tout dispositif d'injection apte à être synchronisé avec l'élément d'obturation peut être utilisé.

Dans le système présenté ici, il est tout à fait envisageable de munir l'élément d'obturation de plusieurs pistes de cames permettant de choisir en fonction des besoins de fonctionnement une séquence de distribution du carburant déterminée, sur le même principe que le système à calage variable des soupapes d'un moteur à piston. Dans ce cas, le culbuteur viendra « lire » l'une ou l'autre des pistes du système de came définissant la séquence d'injection.

## Revendications

1. Système de combustion à volume constant (1) pour turbomachine, le système comprenant une pluralité de chambres de combustion (100) réparties de manière annulaire autour d'un axe (XX'), chaque chambre de combustion comprenant un orifice d'entrée (102) et un orifice de sortie (103), un élément d'obturation sélective (200) mobile en rotation autour de l'axe (XX') par rapport aux chambres de combustion (100), l'élément d'obturation sélective comprenant une virole (210) en regard des orifices d'entrée et de sortie (102, 103) des chambres de combustion (100), la virole (210) comportant sur une première portion annulaire (211) au moins une lumière d'admission (2110) destinée à coopérer avec l'orifice d'entrée (102) de chaque chambre de combustion lors de la rotation de l'élément d'obturation sélective (200) et sur une deuxième portion annulaire (212) au moins une lumière d'échappement (2120) destinée à coopérer avec l'orifice de sortie (103) de chaque chambre de combustion lors de la rotation de l'élément d'obturation sélective, chaque chambre de combustion comprenant un dispositif d'injection de carburant (140) dont l'ouverture et la fermeture sont synchronisées par l'élément d'obturation et le dispositif d'injection de carburant (140) comprenant une vanne d'injection (141) présente entre un circuit d'alimentation en carburant (142) et une chambre de combustion (100) et un culbuteur (143) configuré pour commander l'ouverture de la vanne d'injection, le culbuteur comprenant un poussoir (1430) coopérant avec des cames d'injection, une tige de culbuteur (1431) prolongeant le poussoir (143) et un doigt (1432) monté pivotant autour d'un axe (1433) et relié à une de ses extrémités à la tige de culbuteur (1431).

2. Système selon la revendication 1, comprenant en outre un dispositif d'injection aérodynamique (160) configuré pour alimenter en carburant (170) chaque chambre de combustion (100) de manière synchronisée via un ou plusieurs orifices d'injection (162) présents sur l'élément d'obturation (200).

3. Turbomachine (10) comprenant un compresseur axial ou centrifuge (11) et une turbine axiale ou centripète (12), la turbomachine comprenant en outre un système de combustion (1) selon la revendication 1 ou 2, le système de combustion étant présent entre le compresseur et la turbine.

4. Aéronef comprenant au moins un turbopropulseur, le turbopropulseur comprenant une turbomachine selon la revendication 3.

## Patentansprüche

1. Verbrennungssystem mit konstantem Volumen (1) für eine Turbomaschine, wobei das System mehrere Brennkammern (100) umfasst, die auf ringförmige Weise um eine Achse (XX') verteilt sind, wobei jede Brennkammer eine Eingangsöffnung (102) und eine Ausgangsöffnung (103) umfasst, wobei ein selektives Verschlusselement (200) drehbeweglich um die Achse (XX') in Bezug auf die Brennkammern (100) ist, wobei das selektive Verschlusselement einen Mantel (210) neben der Eingangs- und Ausgangsöffnung (102, 103) der Brennkammern (100) umfasst, wobei der Mantel (210) auf einem ersten ringförmigen Abschnitt (211) mindestens ein Einlassloch (2110), das dazu bestimmt ist, mit der Einlassöffnung (102) jeder Brennkammer bei der Drehung des selektiven Verschlusselements (200) zusammenzuwirken, und auf einem zweiten ringförmigen Abschnitt (212) mindestens ein Auslassloch (2120) beinhaltet, das dazu bestimmt ist, mit der Auslassöffnung (103) jeder Brennkammer bei der Drehung des selektiven Verschlusselements zusammenzuwirken, wobei jede Brennkammer eine Brennstoffeinspritzvorrichtung (140) umfasst, deren Öffnen und Schließen durch das Verschlusselement synchronisiert werden und wobei die Brennstoffeinspritzvorrichtung (140) ein Einspritzventil (141) umfasst, das zwischen einem Brennstoffversorgungskreislauf (142) und einer Brennkammer (100) vorhanden ist, und einen Kipphebel (143), der dazu ausgestaltet ist, das Öffnen des Einspritzventils zu befehlen, wobei der Kipphebel einen Stößel (1430), der mit Einspritznocken zusammenwirkt, eine Kipphebelstange (1431), die den Stößel (143) verlängert, und einen Finger (1432) umfasst, der um eine Achse (1433) schwenkbar montiert und an einem seiner Enden mit der Kipphebelstange (1431) verbunden ist.

2. System nach Anspruch 1, ferner umfassend eine aerodynamische Einspritzvorrichtung (160), die dazu ausgestaltet ist, jede Brennkammer (100) auf synchronisierte Weise über eine oder mehrere Einspritzöffnungen (162), die an dem Verschlusselement (200) vorhanden sind, mit Brennstoff (170) zu versorgen.

3. Turbomaschine (10), umfassend einen Axial- oder Zentrifugalverdichter (11) und eine Axial- oder Zentripetalturbine (12), wobei die Turbomaschine ferner ein Verbrennungssystem (1) nach Anspruch 1 oder 2 umfasst, wobei das Verbrennungssystem zwischen dem Verdichter und der Turbine vorhanden ist.

4. Luftfahrzeug, umfassend mindestens ein Turboproptriebwerk, wobei das Turboproptriebwerk eine Turbomaschine nach Anspruch 3 umfasst.

## Claims

1. A constant volume combustion system (1) for a turbomachine comprising a plurality of combustion chambers (100) distributed annularly about an axis (XX'), each combustion chamber comprising an inlet orifice (102) and an outlet orifice (103), a selective shut-off element (200) movable in rotation about the axis (XX') relative to the combustion chambers (100), the selective shut-off element comprising a shroud (210) facing the inlet and outlet orifices (102, 103) of the combustion chambers (100), the shroud (210) including on a first annular portion (211) at least one intake aperture (2110) intended to cooperate with the inlet orifice (102) of each combustion chamber during the rotation of the selective shut-off element (200) and on a second annular portion (212) at least one exhaust aperture (2120) intended to cooperate with the outlet orifice (103) of each combustion chamber during the rotation of the selective shut-off element, each combustion chamber comprising a fuel injection device (140) whose opening and closing are synchronized by the shut-off element, and the fuel injection device (140) comprising an injection valve (141) present between a fuel supply circuit (142) and a combustion chamber (100) and a rocker arm (143) configured to control the opening of the injection valve, the rocker arm cooperating with one or several injection cams (220) present on the shut-off element (200) to control the opening of the injection valve.

2. The system according to claim 1, further comprising an aerodynamic injection device (160) configured to supply fuel (170) to each combustion chamber (100) in a synchronized manner via one or several injection orifices (162) present on the shut-off element (200).

3. A turbomachine (10) comprising an axial or centrifugal compressor (11) and an axial or centripetal turbine (12), the turbomachine further comprising a combustion system (1) according to claim 1 or 2, the combustion system being present between the compressor and the turbine.

4. An aircraft comprising at least one turboprop, the turboprop comprising a turbomachine according to claim 3.
